# EUROPEAN PATENT APPLICATION

(11) **EP 4 386 945 A1**
(43) Date of publication of application: **19.06.2024**
(21) Application number: 23208325.3
(22) Date of filing: 07.11.2023
(51) Int. Cl.: H01M 50/103, H01M 50/15, H01M 50/169

(54) **RECTANGULAR LITHIUM ION SECONDARY BATTERY**

(30) Priority: 13.12.2022 JP 2022198531
(71) Applicant: Prime Planet Energy & Solutions, Inc., Chuo-ku Tokyo 103-0022 (JP)
(72) Inventor: ITOH, Yusuke, Tokyo, 103-0022 (JP)
(74) Representative: Kuhnen & Wacker Patent- und Rechtsanwaltsbüro PartG mbB

(57) **Abstract**

Provided with a rectangular lithium ion secondary battery (100) in which damage to a welded portion of a battery case caused by repetitive expansion/contraction of an electrode body is suppressed. A rectangular lithium ion secondary battery disclosed here includes an electrode body (20), an electrolyte, and a rectangular battery case (30) housing the electrode body and the electrolyte. The battery case includes an outer case and a lid. The battery case includes a welded portion in which the outer case and the lid are joined by welding. The outer case includes a rectangular bottom wall facing the lid, a pair of long walls (32a), and a pair of short walls (32b). The electrode body has a flat portion in which a positive electrode and a negative electrode are stacked. At least one of the pair of long walls of the outer case includes a groove (80A, 80B, 80C, 80D) located between the lid and an end of the flat portion of the electrode body toward the lid in a direction perpendicular to the lid.

## Description

### TECHNICAL FIELD

The present disclosure relates to a rectangular lithium ion secondary battery.

### BACKGROUND ART

There has been a rapidly increasing demand for lithium ion secondary batteries in application as power supplies for driving vehicles such as battery electric vehicles (BEVs), hybrid electric vehicles (HEVs), and plug-in hybrid electric vehicles (PHEVs).

Lithium ion secondary batteries used as power supplies for driving vehicles, that is, onboard lithium ion secondary batteries, are generally used in the form of battery modules in each of which a plurality of battery cells are electrically connected. Onboard lithium ion secondary batteries are representatively rectangular in order to facilitate constitution of a battery module, and each include an electrode body, an electrolyte, and a rectangular battery case housing the electrode body and the electrolyte. In such a rectangular lithium ion secondary battery, it is known that the battery case can be deformed by expansion/contraction of the electrode body during charge and discharge (see, for example, Patent Document 1).

### CITATION LIST

### PATENT DOCUMENT

Patent Document 1: JP2006-40684A

### SUMMARY OF INVENTION

Vehicles such as BEVs are expected to have a further increased travel range. One way to meet this demand is to increase capacity of lithium ion secondary batteries by increasing the amount of active materials of the positive and negative electrodes. On the other hand, a battery case of a typical rectangular lithium ion secondary battery is sealed by welding a lid and an outer case. Through an intensive study, an inventor of the present disclosure has found that when the packing density of active materials of positive and negative electrodes increases, a difference in volume of an electrode body between expansion and contraction during charge and discharge increases so that stress is thereby focused on a welded portion between a lid and an outer case and, after repetitive charge and discharge, damage to a battery case might occur in the welded portion, disadvantageously.

Embodiments of the present disclosure provide rectangular lithium ion secondary batteries in each of which damage to a welded portion of a battery case caused by repetitive expansion/contraction of an electrode body is suppressed.

A rectangular lithium ion secondary battery disclosed here includes an electrode body, an electrolyte, and a rectangular battery case housing the electrode body and the electrolyte. The battery case includes an outer case and a lid. The battery case includes a welded portion in which the outer case and the lid are joined by welding. The outer case includes a rectangular bottom facing the lid, a pair of long walls, and a pair of short walls. The electrode body includes a flat portion in which a positive electrode and a negative electrode are stacked. At least one of the pair of long walls of the outer case has a groove located between the lid and an end of the flat portion of the electrode body toward the lid, in a direction perpendicular to the lid.

This configuration provides a rectangular lithium ion secondary battery in which damage to a welded portion of a battery case caused by repetitive expansion/contraction of an electrode body is suppressed.

### BRIEF DESCRIPTION OF THE DRAWINGS

FIG. 1 is a perspective view schematically illustrating a rectangular lithium ion secondary battery according to one embodiment.
FIG. 2 is a schematic longitudinal cross-sectional view taken along line II-II in FIG. 1.
FIG. 3 is a schematic disassembled view illustrating a structure of an electrode body of the lithium ion secondary battery according to the embodiment.
FIG. 4 is a schematic cross-sectional view of an upper portion of the rectangular lithium ion secondary battery according to the the embodiment.
FIG. 5 is a schematic cross-sectional view illustrating a vicinity of a welded portion between a lid and a long wall for describing a case without a groove.
FIG. 6 is a schematic cross-sectional view illustrating the vicinity of the welded portion between the lid and the long wall for describing a case with a groove.
FIG. 7 is a perspective view of the rectangular lithium ion secondary battery according to the embodiment for describing a variation of the groove.
FIG. 8 is a perspective view of the rectangular lithium ion secondary battery according to the embodiment for describing another variation of the groove.
FIG. 9 is a schematic cross-sectional view of an upper portion of the rectangular lithium ion secondary battery according to the embodiment for describing yet another variation of the groove.

### DESCRIPTION OF PREFERRED EMBODIMENTS

Embodiments of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general knowledge in the field. In the drawings, members and parts having the same functions are denoted by the same reference characters for description. Dimensional relationships (e.g., length, width, and thickness) in the drawings do not reflect actual dimensional relationships. A numerical range expressed as "A to B" herein includes A and B.

A "secondary battery" herein refers to a storage device enabling repetitive charging and discharging. A "lithium ion secondary battery" herein refers to a secondary battery that uses lithium ions as charge carriers and performs charge and discharge by movement of charges accompanying lithium ions between positive and negative electrodes.

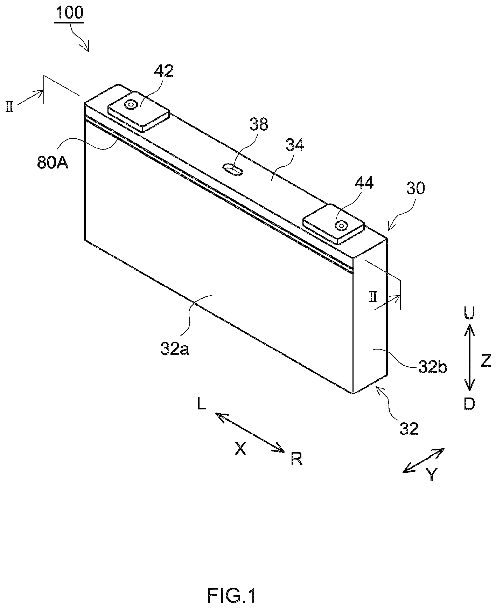

As an example of a rectangular lithium ion secondary battery disclosed here, a rectangular lithium ion secondary battery according to this embodiment will be described with reference to FIGS. 1 through 9.

### <Schematic Configuration of Lithium Ion Secondary Battery>

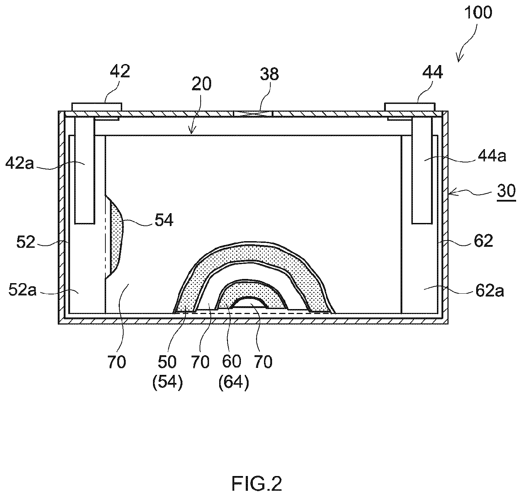

FIG. 1 is a perspective view of a rectangular lithium ion secondary battery 100. FIG. 2 is a schematic longitudinal cross-sectional view taken along line II-II in FIG. 1. It should be noted that in the following description, characters L, R, U, and D in the drawings respectively represent left, right, up, and down, characters X, Y, and Z in the drawings respectively represent a long-side direction, a short-side direction orthogonal to the long-side direction, and a top-bottom direction, of the rectangular lithium ion secondary battery 100. It should be noted that these directions are defined simply for convenience of description, and do not limit the state of installation of the rectangular lithium ion secondary battery 100.

As illustrated in FIG. 2, the rectangular lithium ion secondary battery 100 is a sealed battery in which a flat electrode body 20 and a nonaqueous electrolyte (not shown) are housed in a battery case 30. The battery case 30 includes a positive electrode terminal 42 and a negative electrode terminal 44 for external connection. The battery case 30 also includes a thin safety valve 38 configured to release an internal pressure of the battery case 30 when the internal pressure increases to a predetermined level or more. The battery case 30 has an injection port (not shown) for injecting the nonaqueous electrolyte. The positive electrode terminal 42 is electrically connected to a positive electrode current collector plate 42a. The negative electrode terminal 44 is electrically connected to a negative electrode current collector plate 44a.

As illustrated in FIG. 1, the battery case 30 is rectangular and includes an outer case 32 housing the electrode body 20, and a lid 34 sealing an opening of the outer case 32. The outer case 32 includes a bottom wall, a pair of opposed long walls 32a, and a pair of opposed short walls 32b. The bottom wall is rectangular, and faces the lid 34. The pair of long walls 32a and the pair of short walls 32b extend from the bottom wall.

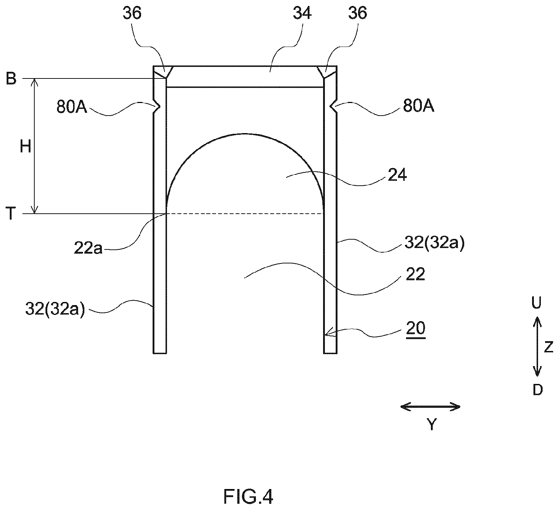

FIG. 4 schematically illustrates a cross section of an upper portion of the rectangular lithium ion secondary battery 100. FIG. 4 is a cross-sectional view perpendicular to directions X. As illustrated in FIG. 4, the outer case 32 and the lid 34 are sealed by welding such as laser welding. Thus, the battery case 30 includes a welded portion 36 in which the outer case 32 and the lid 34 are joined. As illustrated in FIGS. 1 and 4, the pair of long walls 32a includes a groove 80A. This groove 80A will be described later.

A material for the battery case 30 is not particularly limited and is, for example, a metal material that is lightweight and has high thermal conductivity, such as aluminium.

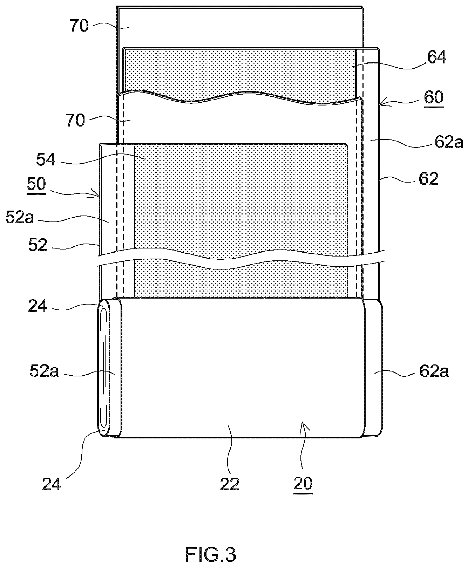

FIG. 3 is a disassembled view schematically illustrating a configuration of the electrode body 20 of the rectangular lithium ion secondary battery 100. In this embodiment, the electrode body 20 is a wound electrode body. However, the electrode body 20 is not limited to this, and may be a stacked-type electrode body in which a plurality of positive electrodes and a plurality of negative electrodes are alternately stacked with separators interposed therebetween.

As illustrated in FIGS. 2 and 3, in the wound electrode body 20, a long positive electrode sheet 50 and a long negative electrode sheet 60 are stacked with two long separator sheets 70 interposed therebetween and are wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each (each in this example) surface of a long negative electrode current collector 62 along the longitudinal direction. A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a.

As illustrated in FIGS. 3 and 4, the wound electrode body 20 includes a flat portion 22 and a pair of R portions 24 at both ends of the flat portion 22. The flat portion 22 of the wound electrode body 20 is generally brought into contact with the inner surfaces of the long walls 32a of the battery case 30. From the viewpoint of suppression of metallic lithium precipitation, in the wound electrode body 20, a dimension of the negative electrode active material layer 64 is generally larger than a dimension of the positive electrode active material layer 54 in the directions X. Thus, a dimension of a contact portion between the wound electrode body 20 and the long walls 32a is generally equal to the dimension of the negative electrode active material layer 64 in the directions X.

The number of layers of the wound electrode body 20 (i.e., the number of layers of positive electrode layers and negative electrode layers in the wound electrode body) is not particularly limited. The number of layers of the wound electrode body 20 may be 40 or more or 60 or more, for example. The number of layers of the wound electrode body 20 is desirably as large as possible because the capacity of the battery can be increased and the recent demand for onboard lithium ion secondary batteries are satisfied. On the other hand, as the number of layers of the wound electrode body 20 increases, a change in volume of the wound electrode body 20 during charge and discharge increases. Thus, as the number of layers of the wound electrode body 20 increases, capacity of the battery increases as well as advantages of the present disclosure increase. Accordingly, the number of layers of the wound electrode body 20 is desirably 90 or more.

The positive electrode current collector 52 constituting the positive electrode sheet 50 may be a known positive electrode current collector for use in a lithium ion secondary battery, and examples of the positive electrode current collector 52 include aluminum foil.

The positive electrode active material layer 54 contains a positive electrode active material. Examples of the positive electrode active material include lithium composite metal oxides (e.g., lithium manganese composite oxide, lithium nickel manganese composite oxide, lithium nickel cobalt manganese composite oxide, and lithium nickel cobalt aluminium composite oxide), and lithium transition metal phosphate compounds (e.g., lithium iron phosphate). The positive electrode active material layer 54 may include a conductive material, a binder and the like. Desired examples of the conductive material include carbon black such as acetylene black (AB) and carbon nanotubes. Examples of the binder include polyvinylidene fluoride (PVDF). The content of the positive electrode active material in the positive electrode active material layer 54 is, for example, 80 mass% or more, desirably 90 mass% or more.

The packing density of the positive electrode active material layer 54 is not particularly limited. As the packaging density of the positive electrode active material layer 54 increases, capacity of the battery increases, whereas a change in volume of the wound electrode body 20 during charge and discharge increases. Thus, as the packing density of the positive electrode active material layer 54 increases, advantages of the present disclosure increase. In view of this, the packing density of the positive electrode active material layer 54 is desirably 2.4 g/cm³ or more, more desirably 2.6 g/cm³ or more, even more desirably 3.5 g/cm³ or more. The upper limit of the packing density of the positive electrode active material layer 54 is not particularly limited, and can be 4.3 g/cm³ or less or 4.1 g/cm³ or less.

The negative electrode current collector 62 constituting the negative electrode sheet 60 may be a known negative electrode current collector for use in a lithium ion secondary battery, and examples of the negative electrode current collector 62 include copper foil.

The negative electrode active material layer 64 contains a negative electrode active material. The negative electrode active material can be, for example, graphite. The negative electrode active material layer 64 may include a binder, a thickener and the like. Examples of the binder include styrene-butadiene rubber (SBR). Examples of the thickener include carboxymethyl cellulose (CMC). The content of the negative electrode active material in the negative electrode active material layer 64 is, for example, 85 mass% or more, desirably 95 mass% or more.

The packing density of the negative electrode active material layer 64 is not particularly limited. As the packaging density of the negative electrode active material layer 64 increases, capacity of the battery increases, whereas a change in volume of the wound electrode body 20 during charge and discharge increases. Thus, as the packing density of the negative electrode active material layer 64 increases, advantages of the present disclosure increase. In view of this, the packing density of the negative electrode active material layer 64 is desirably 1.1 g/cm³ or more, more desirably 1.3 g/cm³ or more, even more desirably 1.5 g/cm³ or more. The upper limit of the packing density of the negative electrode active material layer 64 is not particularly limited, and can be 2.2 g/cm³ or less or 2.0 g/cm³ or less.

Each separator 70 may be a known separator for use in a lithium ion secondary battery, and examples of the separator 70 include a porous sheet of a resin such as polyethylene (PE) or polypropylene (PP). The porous sheet may have a single-layer structure or a multilayer structure. A heat-resistance layer (HRL) may be provided on a surface of each separator 70.

The nonaqueous electrolyte may be a known nonaqueous electrolyte for use in a lithium ion secondary battery, and typically contains a nonaqueous solvent and a supporting electrolyte (i.e., electrolyte salt). Examples of the nonaqueous solvent include carbonates, esters, and ethers. Examples of the supporting electrolyte include lithium salts such as LiPF₆. The nonaqueous electrolyte may include additives such as a gas generating agent, a film forming agent, a dispersant, and a thickener. Although the nonaqueous electrolyte is used as an electrolyte in this embodiment, the electrolyte may be a solid electrolyte.

### <Groove>

As illustrated in FIGS. 1 and 4, the pair of long walls 32a includes the groove 80A. As illustrated in FIG. 4, the groove 80A is located between the lid 34 and an end 22a of the flat portion 22 of the wound electrode body 20 in a direction perpendicular to the lid 34 (i.e., the directions Z in the drawings). The end 22a is an end of the flat portion of the wound electrode body 20 toward the lid 34.

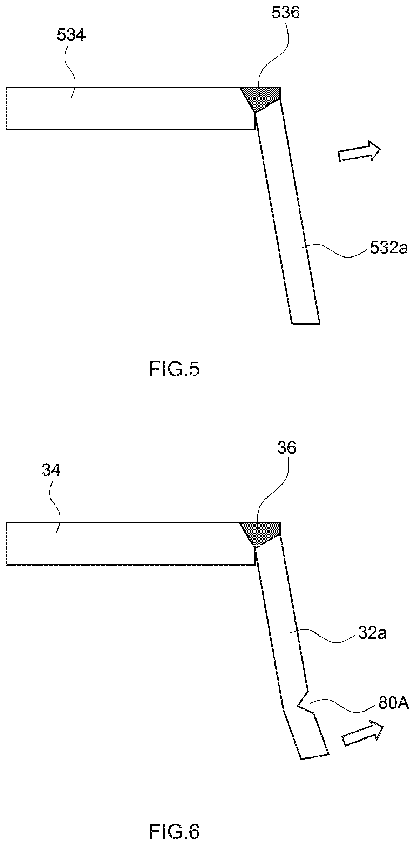

FIG. 5 shows an example of a case where no groove is formed in the long wall, and is a schematic cross-sectional view illustrating a vicinity of a welded portion 536 of a lid 534 and a long wall 532a. When the wound electrode body (not shown) expands, the outer case of the battery case expands outward. Thus, as indicated by the arrow in the drawing, stress is exerted in a direction in which the long wall 532a of the outer case moves away from the lid 534, and this stress is concentrated on the welded portion 536. When the lithium ion secondary battery is repeatedly charged and discharged, expansion/contraction of the wound electrode body repeatedly occurs, and the welded portion 536 is repeatedly subjected to a load and, consequently, can be damaged.

FIG. 6 shows an example of the case of this embodiment, and is a schematic cross-sectional view illustrating a vicinity of the welded portion 36 of the lid 34 and the long wall 32a. In this embodiment, the groove 80A is formed in the long wall 32a of the outer case 32 of the battery case 30. When the wound electrode body 20 expands, stress is exerted in a direction in which the long wall 32a of the outer case moves away from the lid 34, but deformation of the long wall 32a occurs from the groove 80A, which can dissipate the stress. Thus, concentration of the stress on the welded portion 36 can be reduced, and damage to the welded portion 36 caused by repetitive expansion/contraction of the wound electrode body can be suppressed.

The cross-sectional shape of the groove 80A is a V shape in the illustrated example, but is not limited to this. The cross-sectional shape of the groove 80A may be a rectangular shape, a U shape, or an inverted trapezoidal shape.

The depth of the groove 80A (i.e., dimension of the groove 80A in the thickness direction of the long wall 32a (directions Y)) is not particularly limited, and from the viewpoints of dissipating stress and obtaining strength of the battery case 30), is desirably more than 0% and 50% or less, more desirably 5% or more and 30% or less, even more desirably 10% or more and 20% or less, of the thickness of the long wall 32a (i.e., average thickness of a portion of the long wall 32a where no groove is formed) of the outer case 32.

The width of the groove 80A (i.e., dimension of the groove 80A in a direction (directions Z) perpendicular to the lid 34) is not particularly limited. The width may be, for example, 0.1 mm to 3.0 mm and 0.5 mm to 2.0 mm.

The position of the groove 80A in the directions Z is not particularly limited as long as the groove 80A is located between the welded portion 36 and the end 22a of the flat portion 22 of the wound electrode body 20. As illustrated in FIG. 4, supposing the position of the deepest portion of the welded portion 36 in the directions Z (i.e., lowermost point of the welded portion 36 in the directions Z) is B, and the position of the end 22a of the flat portion 22 of the wound electrode body 20 in the directions Z is T. Supposing a distance between the position B and the position T in the directions Z is H. The groove 80A is desirably located at or near a midpoint between the position B and the position T. Specifically, the position of the groove 80A is desirably located away from the position B by a distance of 40% to 60% of the distance H, more desirably by a distance of 45% to 55% of the distance H.

In the illustrated example, the groove 80A is formed only in the pair of long walls 32a. Alternatively, the groove 80A may be formed only in one of the pair of long walls 32a. Even in this case, the effect of suppressing damage to the welded portion 36 of the battery case 30 can also be obtained. The effect of suppressing damage to the welded portion 36 of the battery case 30 is higher in the case where the groove 80A is formed in both the pair of long walls 32a. The groove 80A may also be formed in the pair of short walls 32b as well as the pair of long walls 32a.

In the illustrated example, the groove 80A is formed in the outer surfaces (i.e., exposed surfaces) of the pair of long walls 32a. Alternatively, the groove 80A may be formed in the inner surfaces of the pair of long walls 32a, or may be formed in both the outer surfaces and the inner surfaces of the pair of long walls 32a. The case where the groove 80A is formed only in the outer surfaces of the pair of long walls 32a is more advantageous in terms of easiness in forming the groove 80A.

In the example illustrated in FIG. 1, the groove 80A is continuously formed from one end to the other end of the long wall 32a. Thus, the length of the groove 80A (i.e., dimension of the groove 80A in the directions X) is 100% of the dimension of the long wall 32a in the directions X. However, the present disclosure is not limited to this as long as advantages of the present disclosure are obtained. The length of the groove 80A may be 50% or more or 80% or more of the dimension of the long wall 32a in the directions X. Desirably, in the directions X, the length of the groove 80A is greater than or equal to the dimension of a contact portion between the wound electrode body 20 and the long wall 32a. In this case, in the directions X, both ends of the groove 80A is desirably respectively located at the same position as or outside both ends of the contact portion between the wound electrode body 20 and the long walls 32a. It should be noted that the directions X are perpendicular to the short walls 32b.

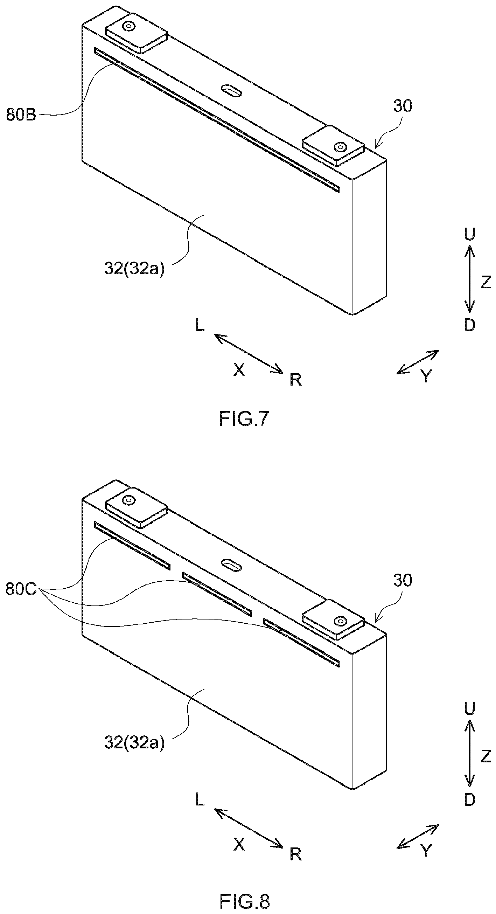

In a variation of a groove illustrated in FIG. 7, a groove 80B is not formed in none of both ends of the long wall 32a, and extends in a center portion of the long wall 32a. The length of the groove 80B (dimension of the groove 80B in the directions X) is desirably 100% or more of a dimension of the contact portion between the wound electrode body 20 and the long wall 32a. However, the length of the groove 80B may be smaller than that in this example as long as advantages of the present disclosure are obtained.

In another variation of a groove illustrated in FIG. 8, a groove 80C is not continuous. As described in this case, the groove does not need to be continuous as long as advantages of the present disclosure are obtained.

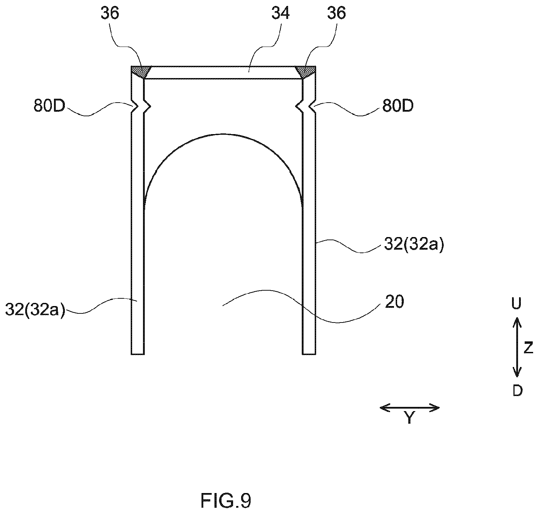

In the illustrated example, the groove 80A is formed as a recessed groove in which the thickness of the long wall 32a of the outer case 32 is reduced. Alternatively, as described in yet another variation of a groove illustrated in FIG. 9, a groove 80D may be formed by bending the long wall 32a of the outer case 32. In this case, the thickness of an outer case 232 can be maintained uniform.

A desired application of the rectangular lithium ion secondary battery 100 is a battery to be mounted on a vehicle, specifically, power supplies for driving vehicles such as battery electric vehicles (BEVs), hybrid electric vehicles (HEVs), and plug-in hybrid electric vehicles (PHEVs). However, the rectangular lithium ion secondary battery 100 is also applicable to other applications (i.e., power supplies for mobile equipment).

Specific examples of the present disclosure have been described in detail hereinbefore, but are merely illustrative examples, and are not intended to limit the scope of claims. The techniques described in claims include various modifications and changes of the above exemplified specific examples.

That is, the rectangular lithium ion secondary battery disclosed here is following items [1] to [5].
[1] A rectangular lithium ion secondary battery including: an electrode body; an electrolyte; and a rectangular battery case housing the electrode body and the electrolyte, in which
   the battery case includes an outer case and a lid,
   the battery case includes a welded portion in which the outer case and the lid are joined by welding,
   the outer case includes a rectangular bottom wall facing the lid, a pair of long walls, and a pair of short walls,
   the electrode body includes a flat portion in which a positive electrode and a negative electrode are stacked, and
   at least one of the pair of long walls of the outer case has a groove located between the lid and an end of the flat portion of the electrode body toward the lid, in a direction perpendicular to the lid.
[2] The rectangular lithium ion secondary battery of item [1] in which a depth of the groove is more than 0% and 50% or less of a thickness of the at least one of the pair of long walls.
[3] The rectangular lithium ion secondary battery of item [1] or [2] in which in a direction perpendicular to the short walls, a length of the groove is larger than a dimension of a contact portion in which the electrode body and the at least one of the pair of long walls are in contact with each other.
[4] The rectangular lithium ion secondary battery of any one of items [1] to [3] in which in a direction perpendicular to the lid, when a distance between a position of a deepest portion of the welded portion and a position of the end of the flat portion of the electrode body is H, a position of the groove is located away from the position of the deepest portion of the welded portion by a distance of 40% to 60% of the distance H.
[5] The rectangular lithium ion secondary battery of any one of items [1] to [4] in which the rectangular lithium ion secondary battery is to be mounted on a vehicle.

## Claims

1. A rectangular lithium ion secondary battery (100) comprising:
an electrode body (20);
an electrolyte; and
a rectangular battery case (30) housing the electrode body (20) and the electrolyte, wherein
the battery case (30) includes an outer case (32) and a lid (34),
the battery case (30) includes a welded portion (36) in which the outer case (32) and the lid (34) are joined by welding,
the outer case (32) includes a rectangular bottom wall facing the lid (34), a pair of long walls (32a), and a pair of short walls,
the electrode body (20) includes a flat portion (22) in which a positive electrode (50) and a negative electrode (60) are stacked, and
at least one of the pair of long walls (32a) of the outer case (32) has a groove (80A, 80B, 80C, 80D) located between the lid (34) and an end (22a) of the flat portion (22) of the electrode body (20) toward the lid (34), in a direction perpendicular to the lid (34).

2. The rectangular lithium ion secondary battery (100) according to claim 1, wherein a depth of the groove (80A, 80B, 80C, 80D) is more than 0% and 50% or less of a thickness of the at least one of the pair of long walls (32a).

3. The rectangular lithium ion secondary battery (100) according to claim 1, wherein in a direction perpendicular to the short walls, a length of the groove (80A, 80B, 80C, 80D) is larger than a dimension of a contact portion in which the electrode body (20) and the at least one of the pair of long walls (32a) are in contact with each other.

4. The rectangular lithium ion secondary battery (100) according to claim 1, wherein in a direction perpendicular to the lid (34), when a distance between a position of a deepest portion of the welded portion (36) and a position of the end (22a) of the flat portion (22) of the electrode body (20) is H, a position of the groove (80A, 80B, 80C, 80D) is located away from the position of the deepest portion of the welded portion (36) by a distance of 40% to 60% of the distance H.

5. The rectangular lithium ion secondary battery (100) according to claim 1, wherein the rectangular lithium ion secondary battery (100) is to be mounted on a vehicle.
